# FASCICULE DE BREVET EUROPEEN

(11) **EP 0 759 017 B1**
(45) Date de publication et mention de la délivrance du brevet: **30.12.1998**
(21) Numéro de dépôt: 95924287.6
(22) Date de dépôt: 19.06.1995
(51) Int. Cl.: C04B 14/36, H01B 1/18, H01B 1/24, C08K 3/00

(54) **MATERIAU DE CONSTRUCTION CONDUCTEUR D'ELECTRICITE**
ELEKTRISCH LEITFAHIGES BAUMATERIAL
ELECTRICALLY CONDUCTIVE BUILDING MATERIAL

(30) Priorité: 24.06.1994 CH 2023/94
(43) Date de publication de la demande: 26.02.1997
(73) Titulaire: ELFINCO S.A., 1700 Fribourg (CH)
(72) Inventeur: BENNETT, Ronald, Wilfred, Murdoch, CH-1260 Nyon (CH)
(74) Mandataire: Kiliaridis, Constantin
(86) Numéro de dépôt international: EP9502373
(87) Numéro de publication internationale: WO9600197

(56) Documents cités:
- EP-A- 0 032 375
- FR-A- 2 216 244
- FR-A- 2 596 403
- GB-A- 1 424 162
- PATENT ABSTRACTS OF JAPAN vol. 012 no. 482 (C-553) ,15 Décembre 1988 & JP,A,63 196672 (ASAHI CHEM RES LAB LTD) 15 Août 1988,
- CHEMICAL ABSTRACTS, vol. 111, no. 20, 13 Novembre 1989 Columbus, Ohio, US; abstract no. 179801, & JP-A-01 126 248 (DENKI KAGAKU KOGYO K.K.) 18 Mai 1989
- DATABASE WPI Week 8640 Derwent Publications Ltd., London, GB; AN 261027 & JP-A-61 188 472 (KOWA KAGAKU KOGYO) , 22 Août 1986

## Description

La présente invention concerne un matériau de construction conducteur d'électricité.

Il est connu à ce jour l'utilisation de matériaux de construction en tant que blindage conducteur d'électricité contre les radiations électromagnétiques. Le brevet GB 1 424 162 décrit des enduits conducteurs d'électricité à base de ciment avec du graphite dispersé appliqué sur une grille de renforcement pour un enduit de blindage pour occulter les fréquences entre 20 KHz à 50 KHz.

Dans le FR-A-2 216 244 sont décrits des enduits à base de ciment et deux carbones dispersés de granulométrie différente pour des matériaux de structure conducteurs d'électricité tels que connexion de mise à terre, sols antistatiques et parois occultant les fréquences radio.

Dans le JP-A-63 196 672 on propose un composé de fabrication de résistances électriques et circuits électriques comprenant un liant organique, un carbone amorphe, du graphite en forme de whiskers et de la silice.

Dans le EP-A-032 375, on décrit un élastomère conducteur d'électricité comprenant un copoyletherester et une mixture de carbone et graphite destiné à être utilisé dans des équipements électroniques et machines de bureaux.

Néanmoins, les performances d'atténuation de blindages conducteurs d'électricité connues ne sont pas linéaires dans une gamme de fréquences. Certaines gammes de fréquences sont plus importantes pour certaines applications que d'autres, par exemple une gamme de fréquence particulièrement importante pour le blindage de sécurité et la fréquence se trouvant entre 1 MHz à 10 GHz. Néanmoins, les performances d'atténuation de la plupart des matériaux sont relativement faibles autour du niveau de 100 MHz. Puisque la performance d'atténuation normalement présentée est une moyenne sur une large bande de fréquence, les déficiences des performances d'atténuation dans une bande de fréquence particulièrement importante, par exemple la région de 100 MHz est souvent non apparente.

Le carbone est allotropique et se présente largement dans ses formes élémentaires cristalline ou solide amorphe. Il est présenté dans le coke sous forme amorphe et des exemples de forme cristalline sont le graphite et le diamant. Dans les différentes applications, on a utilisé soit le carbone amorphe, soit le graphite.

Le but de la présente invention est :
1. de proposer un matériau de construction conducteur d'électricité dans le but d'occulter les radiations électromagnétiques et TEMPEST (dénomination utilisée par l'OTAN concernant le phénomène de radiations non intentionnelles résultant de systèmes de traitement de communication et d'information) et plus particulièrement dans la gamme de fréquences comprise entre 1 MHz et 10 GHz.
2. de proposer des matériaux de construction conducteurs d'électricité pour la construction de sols antistatiques, de barrières sensibles à l'intrusion, éléments de chauffage, éléments de mise en terre, grands condensateurs, antennes...

Le matériau selon la présente invention est caractérisé par le fait qu'il comprend une mixture de graphite et carbone amorphe du sable et que le liant comprend des résines polyamide ou des résines polycarbonate ainsi qu'un matériau à base de ciment, et que la grandeur des particules du graphite est inférieure à 10 µm.

L'avantage du matériau selon la présente invention est le fait que l'utilisation simultanée du carbone amorphe et du graphite d'une granulométrie inférieure à 10 µm produit un effet inattendu de synergie entre les deux qui améliore l'efficacité du matériau.

Des exemples de liants pour le matériau selon l'invention comprennent soit du ciment ordinaire Portland ou des cendres de fuel pulvérisées ou du ciment à séchage rapide ou bien une combinaison de ces éléments. Les proportions relatives du liant, sable et graphite et carbone amorphe dans le matériau affecte aussi bien ses qualités de blindage que ses propriétés physiques. De grandes concentrations de carbone dans le mélange conduisent à un matériau fragile et cassant qui est difficile ã travailler et qui nécessite un support, par exemple pris en sandwich entre deux feuilles de plâtre. D'autre part, si la proportion de carbone dans le mélange est inférieure à envircn 20 % du poids total du matériau l'efficacité du blindage se détériore. La proportion préférée de la mixture graphite/carbone amorphe par rapport au poids total du matériau est entre 25 % et 75 % et de préférence entre 35 % et 65 %.

Le pourcentage de graphite dans la mixture graphite/ carbone amorphe est entre 10 % et 95 % par rapport au poids de cette mixture en fonction de l'utilisation du matériau. Par exemple dans un matériau où le graphite représente 10 % de la mixture graphite/carbone amorphe, une résistivité d'environ 0,35 Ohms m est obtenue. Dans une proportion de 50 %, la résistivité est de 0,024 Ohms m, tandis qu'à 95 % la résistivité est approximativement de 0,005 Ohms m. Ainsi, plus la proportion de graphite est grande, plus la conductivité requise est élevée et le matériau peut être utilisé en tant que blindage électromagnétique contre des hautes fréquences. Inversement, un pourcentage bas de graphite augmente la résistivité ce qui est utile lorsque le matériau doit être utilisé en tant qu'élément de chauffage. Un pourcentage élevé de carbone amorphe sert également à renforcer le matériau ce qui est nécessaire pour certaines applications lorsque le matériau est soumis à des efforts importants, par exemple lorsque il peut être utilisé pour la construction de planchers. D'autre part, dans certaines applications, par exemple le système d'alarme, le matériau doit être hautement conducteur et cassant, dans ce cas les pourcentages maxima de graphite sont nécessaires.

Il est également important pour la performance du matériau que la grandeur des particules de graphite ne soit pas supérieure à 10 µm et celles de carbone amorphe ne doit pas être supérieur à 1 mm. Il est préférable que la grandeur des particules du sable utilisé soit supérieure que l'une ou l'autre des particules de carbone amorphe ou du graphite. Le carbone amorphe présent dans le matériau sous la forme de coke calciné ou toutes cendres contenant du carbone amorphe résultant de la combustion d'un composant organique.

Le matériau peut être amélioré par l'introduction de substances pentavalentes et trivalentes dans des proportions différentes mais n'excédant pas le 1 % du poids total de carbone amorphe. L'introduction de ces additifs sert à améliorer la conductivité du matériau en dopant les éléments semi-conducteurs se trouvant dans le matériau. Des exemples de substances pentavalentes sont entre autres le phosphore, l'antimoine et l'arsenic et en tant que substance trivalente le gallium et indium.

Le matériau peut être complété avec d'autres composants tels que des plastifiants, des repoussants d'eau tel que l'éther de silicone, sulfate du barrium, du zinc et de l'aluminium. La présence de chacun de ces additifs peut être particulièrement avantageuse si la protection contre des hautes fréquences est nécessaire. Par exemple, le ferrite de barrium et particulièrement efficace pour l'atténuation des fréquences au-delà de 5 GHz, l'aluminium améliore aussi bien les propriétés structurelles que fonctionnelles (blindage du matériau). L'addition de repoussants d'eau est particulièrement efficace lorsque le matériau est utilisé pour faire des enduits ou des plafonds.

L'invention concerne également un procédé de fabrication du matériau selon lequel on mixe le ou les liants avec un mélange préparé préalablement comprenant tous les autres éléments.

Préférablement le sable est d'abord mélangé avec le graphite seulement et par la suite ce mélange est mixé avec le carbone amorphe. Il semble que de cette manière on s'assure que les particules de sable sont couvertes efficacement avec les particules de graphite avant tout autre mélange, ce qui améliore les propriétés de blindage du matériau.

Le but de l'invention, en ce qui concerne l'atténuation des radiations électromagnétiques et notamment contre les radiations TEMPEST, est atteint par le phénomène d'absorption et réflexion. L'atténuation est la somme de la capacité du matériau d'absorber et réfléchir des signaux. Cette capacité provient aussi bien de la conductivité du matériau que de sa perméabilité et sa porosité après son mélange avec l'eau. A ce jour, une perméabilité de 1,26 du matériau par rapport au cuivre a été obtenue et une résistivité de 0,024 Ohms m. Ceci est obtenu dans un mélange ne contenant pas plus de 50 % de carbone amorphe et graphite par rapport au poids total du matériau. Le carbone amorphe agit comme un semi-conducteur pour augmenter la conductivité globable du matériau. Cet effet est augmenté par la suite par l'inclusion de substances trivalentes et pentavalentes qui servent à doper la semi-conductivité du carbone amorphe et ainsi augmenter sa conductivité. Le carbone amorphe augmente la perméabilité du matériau et améliore les propriétés structurelles de ce dernier. L'inclusion de carbone amorphe améliore l'efficacité du matériau en tant que blindage électromagnétique.

Le matériau selon l'invention peut être utilisé principalement sous trois formes principales :
1. en tant qu'enduit ou mortier comprenant le matériau selon l'invention avec de l'eau environ 5 % d'eau par rapport au poids total des constituants à base de ciment;
2. en tant que panneau de construction en forme de sandwich comprenant deux feuilles support, par exemple du plâtre, une mixture avec le matériau de construction et de l'eau dans une proportion d'environ 5 % d'eau par rapport au poids total des constituants à base de ciment.
3. en tant que bloc de construction comprenant le matériau de l'invention également mélangé avec de l'eau à environ 5 % du poids total du matériau moulé en différentes grandeurs de blocs de construction, de tels blocs sont soumis à une compression lors de la fabrication, ce qui améliore la conductivité par la diminution de la porosité.

L'une ou l'autre de ces trois formes de matériau de l'invention peut être utilisée pour une chambre blindée ou un bâtiment contre les radiations électromagnétiques en utilisant l'enduit sur les parois, plafonds, plancher intérieurement ou extérieurement, ou en fixant des panneaux sur lesdits éléments ou en construisant et tapissant une chambre ou un bâtiment avec des éléments de construction qui doivent être cimentés ensembles en utilisant également le matériau de construction.

Dans le but d'améliorer les propriétés structurelles et améliorer le blindage, une grille dont les trous ne sont pas supérieurs à 12 mm de diamètre peut également être utilisée avant l'application du panneau ou de l'enduit. Par exemple en fixant une grille métallique de 2,5 mm d'ouverture de trou avant l'application d'un enduit on améliore l'atténuation d'environ 10 dB pour les fréquences d'environ 100 MHz.

Le blindage conducteur d'électricité, produit en utilisant le matériau selon l'invention, peut être incorporé dans la structure des bâtiments ou des bureaux, lorsque c'est utile, par exemple, en tant qu'écran pour l'atténuation des radiations électromagnétiques.

On peut ainsi protéger les installations d'ordinateur contre les influences extérieures en association avec le phénomène TEMPEST en obtenant une atténuation d'au moins 30 dB par la réflexion et absorption des fréquences dans la gamme de 1 MHz à 10 GHz. Les variantes du matériau conducteur d'électricité, selon l'invention, permettent de l'utiliser pour d'autres buts, par exemple pour la construction d'un plancher antistatique, conducteurs lumineux, connexion de mise à terre, d'antennes, résistances, condensateurs.

Etant donné que le matériau selon l'invention est conducteur, des parois d'une chambre qui ont été enduites utilisant le matériau sont rendues conductrices d'électricité. Ceci peut être exploité pour procurer un système de communication ou d'alarme. Par exemple, une chambre peut être mise sous alarme en induisant les murs avec un plâtre utilisant le matériau selon l'invention et en appliquant une tension. Si la paroi traitée de cette manière est cassée par intrusion, les modifications à la tension pourront être détectées et utilisées pour activer un système d'alarme. La conductivité de ce matériau permet de l'utiliser en tant qu'antenne, la paroi enduite agissant en tant que détecteur, par exemple pour des signaux radio. Une autre application serait également d'utiliser ce matériau pour construire des très grands condensateurs.

En plus, le matériau selon l'invention présente une résistance et si un courant passe à travers un matériau, la température du matériau augmente ainsi il peut être utilisé en tant qu'élément de chauffage. La puissance utilisée pour maintenir le chauffage à un niveau stable est atténuée car le matériau présente un coefficient négatif de résistance augmentant avec la température permettant ainsi de réduire le coût de chauffage.

Le matériau décrit précédemment n'a pas de propriétés magnétiques puisqu'il n'est pas capable de retenir une charge.

Selon une variante d'exécution, on peut doter le matériau avec des propriétés magnétiques en ajoutant au liant, le sable, le carbone amorphe, le graphite et des molécules métalliques magnétiques ou magnétisables.

Ainsi, dans un ouvrage construit par un tel matériau, le courant électrique passe à travers le matériau, la charge est retenue et lorsque l'alimentation en courant est arrêtée, une décharge sous forme de courant électrique est produite. De la même manière, si le matériau est introduit dans un champs magnétique, il se charge électriquement.

Selon une autre variante d'exécution, les molécules métalliques magnétiques sont des molécules ferreuses.

Selon une autre variante d'exécution, les molécules métalliques sont des sels magnétiques avec comme avantage principal le fait que lorsque le matériau est mouillé ou placé dans de l'eau, il s'autocharge jusqu'à un certain niveau, c'est-à-dire qu'il se comporte comme une pile qui peut par la suite être déchargée. Lorsque le matériau sèche, la charge baisse jusqu'à un certain niveau.

Les propriétés magnétiques de ce matériau permettent d'atténuer des fréquences aussi bien basses qu'élevées. Une application intéressante de ce "blindage" est le fait que les champs électromagnétiques à basse fréquence générés, par exemple, par des câbles de transfert d'énergie à haute tension peut être atténués. Cette application est importante depuis qu'on a découvert que de tels champs magnétiques sont néfastes à la santé humaine.

L'augmentation substantielle de la charge électrique, lorsque ce matériau est mouillé, permet de l'utiliser en tant que membrane de protection à l'extérieur d'un conteneur contenant des produits chimiques dangereux car une fuite peut être détectée très rapidement par l'augmentation de la charge électrique qui est mesurée en permanence par un système de mesure adéquat.

Une autre application d'un tel matériau peut être la détection des fissures ou fractures dangereuses dans les parois des tunnels sous l'eau ou de barrages hydroélectriques, ou de ponts.

## Revendications

1. Matériau de construction conducteur d'électricité comprenant au moins un liant, caractérisé par le fait qu'il comprend une mixture de graphite et carbone amorphe et du sable, ou que le liant comprend des résines polyamide ou des résines polycarbonate ainsi qu'un matériau à base de ciment, et que la grandeur des particules du graphite est inférieure à 10 µm.

2. Matériau selon la revendication 1, caractérisé par le fait que le poids de la mixture graphite et carbone amorphe représente entre le 25 % et 75 % du poids total du matériau.

3. Matériau selon l'une des revendications 1 ou 2, caractérisé par le fait que le poids du graphite est compris entre 10 % et 95 % du poids de la mixture graphite et carbone amorphe.

4. Matériau selon l'une des revendications 1 ou 3, caractérisé par le fait que la quantité de sable représente 20 % à 50 % du poids de la mixture sable et liant

5. Matériau selon l'une des revendications 1 à 4, caractérisé par le fait que le carbone amorphe comprend du coke calciné ou toute autre cendre contenant du carbone amorphe produit par la combustion d'un composant organique.

6. Matériau selon l'une des revendications 1 à 5, caractérisé par le fait que des substances trivalentes et/ou pentavalentes dans une proportion maximum de 1 % du poids total du carbone amorphe dans le but de doper les éléments semi-conducteurs du matériau.

7. Matériau selon l'une des revendications précédentes, caractérisé par le fait que la grandeur des particules de carbone amorphe est inférieure à 1 mm, tandis que les particules de sable sont d'une grandeur supérieure soit aux particules de graphite, soit aux particules de carbone amorphe.

8. Matériau selon l'une des revendications 1 à 7, caractérisé par le fait qu'il comprend de l'eau représentant environ 50 % du poids total des matériaux à base de ciment.

9. Panneau de construction, caractérisé par le fait qu'il est formé en sandwich comprenant le matériau selon la revendication 8 entre deux feuilles support.

10. Bloc de construction formé par moulage du matériau selon la revendication 8 et que l'on comprime ledit bloc pour améliorer la conductivité en diminuant sa porosité.

11. Procédé de fabrication du matériau selon l'une des revendications 1 à 7, caractérisé par le fait que l'on introduit dans le mélange le ou les liants après avoir mélangé les autres éléments.

12. Procédé de fabrication du matériau selon l'une des revendications 1 à 7, caractérisé par le fait que le sable est d'abord mélangé avec le graphite pour former un mélange graphite/sable et ensuite avec du carbone amorphe et les éventuelles substances trivalentes et pentavalentes.

13. Blindage électroconducteur contre les radiations électromagnétiques par l'utilisation du matériau selon la revendication 8 et/ou les panneaux de construction selon la revendication 9 et/ou les blocs de construction selon la revendication 10.

14. Blindage conducteur d'électricité selon la revendication 13, caractérisé par le fait qu'il comprend également une grille métallique dont la largeur des mailles n'est pas supérieure à 12 mm.

15. Matériau selon la revendication 1, caractérisé par le fait qu'il comprend des molécules métalliques magnétiques ou magnétisables.

16. Matériau selon la revendication 15, caractérisé par le fait que lesdites molécules sont des molécules ferreuses.

17. Matériau selon l'une des revendications 15 ou 16, caractérisé par le fait que lesdites molécules sont des sels magnétiques.

## Patentansprüche

1. Elektrisch leitfähiges Baumaterial mit wenigstens einem Bindemittel, dadurch gekennzeichnet, dass es eine Mischung aus Graphit und amorphem Kohlenstoff und Sand aufweist, dass das Bindemittel Polyamidharze oder Polycarbonatharze sowie ein Material auf der Basis von Zement aufweist und dass die Grösse der Graphitteilchen kleiner als 10 µm ist.

2. Material nach Anspruch 1, dadurch gekennzeichnet, dass das Gewicht der Mischung aus Graphit und amorphem Kohlenstoff zwischen 25% und 75% des Gesamtgewichts des Materials beträgt.

3. Material nach einem der Ansprüche 1 oder 2, dadurch gekennzeichnet, dass das Gewicht des Graphits zwischen 10% und 75% des Gewichts der Mischung aus Graphit und amorphem Kohlenstoff beträgt.

4. Material nach einem der Ansprüche 1 oder 3, dadurch gekennzeichnet, dass die Sandmenge 20% bis 50% des Gewichts der Mischung aus Sand und Bindemittel beträgt.

5. Material nach einem der Ansprüche 1 bis 4, dadurch gekennzeichnet, dass der amorphe Kohlenstoff kalzinierten Koks oder eine beliebige andere Asche aufweist, die amorphen Kohlenstoff enthält, welcher durch die Verbrennung einer organischen Komponente erzeugt wurde.

6. Material nach einem der Ansprüche 1 bis 5, dadurch gekennzeichnet, dass es dreiwertige und/oder fünfwertige Substanzen mit einem maximalen Anteil von 1% des Gesamtgewichts des amorphen Kohlenstoffs aufweist, um die Halbleiterelemente des Materials zu dotieren.

7. Material nach einem der vorangehenden Ansprüche, dadurch gekennzeichnet, dass die Grösse der Teilchen des amorphen Kohlenstoffs kleiner als 1 mm ist, während die Sandteilchen eine Grösse haben, die grösser als entweder die Graphitteilchen oder als die Teilchen des amorphen Kohlenstoffs ist.

8. Material nach einem der Ansprüche 1 bis 7, dadurch gekennzeichnet, dass es Wasser aufweist, welches ungefähr 50% des Gesamtgewichts der Materialien auf der Basis von Zement ausmacht.

9. Bauplatte, dadurch gekennzeichnet, dass sie in Form einer Sandwichplatte ausgebildet ist, welche Material nach Anspruch 8 zwischen zwei Stützschichten aufweist.

10. Baublock, welcher durch Giessen von Material nach Anspruch 8 hergestellt ist und wobei dieser Block komprimiert wird, um die Leitfähigkeit zu verbessern, indem seine Porosität verringert wird.

11. Verfahren zur Herstellung des Materials nach einem der Ansprüche 1 bis 7, dadurch gekennzeichnet, dass man in die Mischung das oder die Bindemittel eingibt, nachdem die anderen Elemente vermischt worden sind.

12. Verfahren zur Herstellung des Materials nach einem der Ansprüche 1 bis 7, dadurch gekennzeichnet, dass der Sand zunächst mit dem Graphit gemischt wird, um eine Graphit/Sand-Mischung herzustellen, und dass er dann mit amorphem Kohlenstoff und den eventuellen dreiwertigen und fünfwertigen Substanzen gemischt wird.

13. Elektrisch leitfähige Abschirmung gegen elektromagnetische Strahlungen durch die Verwendung des Materials nach Anspruch 8 und/oder der Bauplatten nach Anspruch 9 und/oder der Baublöcke nach Anspruch 10.

14. Elektrisch leitfähige Abschirmung nach Anspruch 13, dadurch gekennzeichnet, dass sie ausserdem ein metallisches Gitter aufweist, dessen Maschenbreite nicht grösser als 12 mm ist.

15. Material nach Anspruch 1, dadurch gekennzeichnet, dass es metallische magnetische oder magnetisierbare Moleküle aufweist.

16. Material nach Anspruch 15, dadurch gekennzeichnet, dass die erwähnten Moleküle eisenhaltige Moleküle sind.

17. Material nach einem der Ansprüche 15 oder 16, dadurch gekennzeichnet, dass die erwähnten Moleküle magnetische Salze sind.

## Claims

1. Electrically conductive building material comprising at least a binder, characterized by the fact that it comprises a mixture of graphite and amorphous carbon and sand, that the binder comprises polyamide resins or polycarbonate resins and a cement-based material, and that the size of the particles is smaller than 10 µm.

2. Material according to claim 1, characterized by the fact that the weight of the mixture of graphite and amorphous carbon represents between 25% and 75% of the total weight of the material.

3. Material according to claim 1, characterized by the fact that the weight of graphite is comprised between 10% and 95% of the weight of the mixture of graphite and amorphous carbon.

4. Material according to claim 1, characterized by the fact that the quantity of sand represents 20% to 50% of the weight of the mix of sand and binder.

5. Material according to claim 1, characterized by the fact that the amorphous carbon comprises calcined coke or any other ashes containing amorphous carbon produced by combustion of an organic component.

6. Material according to claim 1, characterized by the fact that it comprises trivalent and/or pentavalent substances in a maximal proportion of 1% of the total weight of amorphous carbon in order to dope the semiconductor elements of the material.

7. Material according to claim 1, characterized by the fact that the size of the amorphous carbon particles is smaller than 1 mm, whereas the sand particles are of a larger size than the graphite particles, or than the amorphous carbon particles.

8. Material according to claim 1, characterized by the fact that it comprises water representing about 50% of the total weight of the cement-based materials.

9. Construction panel, characterized by the fact that it is sandwich-formed comprising the material according to claim 8 between two support sheets.

10. Construction block formed by molding the material according to claim 8 and wherein said block is compressed for improving the conductivity by reducing its porosity.

11. Process for producing the material according to claim 1, characterized by the fact that the binder or the several binders is introduced in the mix after the other components have been mixed.

12. Process for producing the material according to claim 1, characterized by the fact that the sand is firstly mixed with graphite to form a graphite/sand mix and then with amorphous carbon and the possible trivalent and pentavalent substances.

13. Electroconductive shield against electromagnetic radiations by the use of the material according to claim 8 and/or the construction panels according to claim 9 and/or the construction blocks according to claim 10.

14. Electrically conductive shield according to claim 13, characterized by the fact that it further comprises a metal grid with a mesh size not larger than 12 mm.

15. Material according to claim 1, characterized by the fact that it comprises magnetic or magnetizable metallic molecules.

16. Material according to claim 15, characterized by the fact that said molecules are ferrous molecules.

17. Material according to claim 15, characterized by the fact that said molecules are magnetic salts.
